# EUROPEAN PATENT APPLICATION

(11) **EP 2 077 300 A1**
(43) Date of publication of application: **08.07.2009**
(21) Application number: 07828394.2
(22) Date of filing: 26.09.2007
(51) Int. Cl.: C08L 77/02, C08J 5/04, C08L 1/02, C08L 89/00, C08L 97/02

(54) **RESIN COMPOSITION, SHAPED ARTICLE AND PROCESS FOR PRODUCING THE SAME, AND ELECTRONIC EQUIPMENT**

(30) Priority: 23.10.2006 JP 2006287461; 07.09.2007 JP 2007232549
(71) Applicant: Sony Corporation, Tokyo 108-0075 (JP)
(72) Inventor: TABATA, Seiichiro, Minato-ku Tokyo 108-0075 (JP); YAMADA, Shinichiro, Minato-ku Tokyo 108-0075 (JP); MORI, Hiroyuki, Minato-ku Tokyo 108-0075 (JP); NOGUCHI, Tsutomu, Minato-ku Tokyo 108-0075 (JP)
(74) Representative: Müller - Hoffmann & Partner
(86) International application number: PCT/JP2007/068621
(87) International publication number: WO 2008/050568

(57) **Abstract**

A resin composition that has high mechanical strength properties, has superior chemical characteristics such as chemical resistance and heat resistance, has high degree of freedom of product design, and has a structure considering the impact on environment is provided at low cost. The resin composition composed of a polyamide resin contains a cotton fiber as a natural fiber. The additive amount of the cotton fiber is preferably 1 wt% to 25 wt% both inclusive. The polyamide resin is polyamide 11 using castor oil as a raw material of plant origin. The average fiber diameter of the cotton fiber is 100 µm or less. The polyamide resin and the cotton fiber are melted and kneaded, and then hot-formed, and thereby a shaped article containing a plant fiber can be fabricated. In addition to the cotton fiber, a plant fiber such as a hemp fiber, a bamboo fiber, and wood powder and a biofiber such as a silk fiber may be applied.

## Description

### TECHNICAL FIELD

The present invention relates to a resin composition made by using a polyamide resin, a shaped article thereof and a method of manufacturing the same, and an electronic device using the shaped article.

### BACKGROUND ART

A polyamide resin is a material having superior various physical properties such as heat resistance, toughness, oil resistance, petrol resistance, and rub resistance. Further, the polyamide resin is a material suitable for manufacturing a shaped article. Therefore, the polyamide resin has been conventionally used in various fields such as automotive parts and electric and electronic devices. In particular, in the automotive field, the polyamide resin is used for peripheral parts of engine and many members.

Further, by using a fact that the polyamide resin is a crystalline resin, for the purpose of improving the elasticity in an injection-molded article, conventionally, techniques for a material in which a glass fiber, a carbon fiber or the like is dispersed and mixed in the polyamide resin have been proposed (for example, refer to Patent Documents 1 to 5).
Patent Document 1: Japanese Unexamined Patent Application Publication No. 2001-131427
Patent Document 2: Japanese Unexamined Patent Application Publication No. 2005-83227
Patent Document 3: Japanese Unexamined Patent Application Publication No. 2002-309108
Patent Document 4: Japanese Unexamined Patent Application Publication No. H07-233321 1
Patent Document 5: Japanese Unexamined Patent Application Publication No. 2006-169356

### DISCLOSURE OF INVENTION

In the future, it may be increasingly requested to provide at low cost a resin composition suitable as a material for an electric and electronic device housing or the like that has high various mechanical strength properties such as elasticity, has superior chemical characteristics such as chemical resistance and heat resistance, has high degree of freedom of product design, and has a structure considering the impact on environment.

In view of the foregoing problem, it is an object of the present invention to provide a resin composition that has high various mechanical strength properties such as elasticity, has superior chemical characteristics such as chemical resistance and heat resistance, has high degree of freedom of product design, and has a structure considering the impact on environment, a shaped article using the resin composition and a method of manufacturing the same, and an electronic device.

A resin composition according to the present invention contains a polyamide resin and a natural fiber. As the natural fiber, specifically, a plant fiber such as cotton, hemp, bamboo, and wood powder and a silk fiber (biofiber) and the like are included. As the polyamide resin, in particular, polyamide 11 synthesized from a raw material of plant origin is preferable.

A shaped article according to the present invention uses the foregoing resin composition of the present invention. An electronic device of the present invention is configured by fabricating the housing thereof or the like from the shaped article.

A method of manufacturing a shaped article according to the present invention includes the steps of: forming a resin composition by melting and kneading a polyamide resin and the foregoing natural fiber composed of the plant fiber (cotton, hemp, bamboo, or wood powder) or the biofiber (silk fiber); and obtaining a shaped article by hot-forming the resin composition, and as the polyamide resin, polyamide 11 synthesized from a raw material of plant origin is used.

According to the resin composition of the present invention, the plant fiber or the biofiber is contained together with the polyamide resin. Thus, the resin composition of the present invention becomes a resin composition that has superior various mechanical strength properties such as elasticity, has superior chemical characteristics such as chemical resistance and heat resistance, has high degree of freedom of product design, and considers the impact on environment. Accordingly, a resin composition suitable for a shaped article such as the housing of the electronic device of the present invention and automotive parts can be provided at low cost.

Further, according to the method of manufacturing a shaped article of the present invention, since the foregoing resin composition is used, the shaped article of the present invention can be easily manufactured at low cost.

### BRIEF DESCRIPTION OF DRAWINGS

[Fig. 1] Fig. 1 is a characteristics diagram illustrating viscoelasticity test results of examples and a comparative example according to a first embodiment of the invention.
[Fig. 2] Fig. 2 is a characteristics diagram illustrating viscoelasticity test results of examples and a comparative example according to a second embodiment of the invention.
[Fig. 3] Fig. 3 is a characteristics diagram illustrating viscoelasticity test results of examples and a comparative example according to a third embodiment of the invention.
[Fig. 4] Fig. 4 is a characteristics diagram illustrating viscoelasticity test results of examples and a comparative example according to a fourth embodiment of the invention.
[Fig. 5] Fig. 5 is a characteristics diagram illustrating viscoelasticity test results of examples and comparative examples according to a fifth embodiment of the invention.
[Fig. 6] Fig. 6 is a view illustrating a configuration of an electronic device using a shaped article of the present invention.

### BEST MODE(S) FOR CARRYING OUT THE INVENTION

### [First embodiment]

A resin composition according to a first embodiment of the present invention contains a polyamide resin and, for example, a cotton fiber as a plant fiber out of natural fibers. As the cotton, various varieties of Genus Gossypium are included. Specifically, G. hirstum (Australian cotton, Chinese cotton, Mexican cotton, Syrian cotton, Zimbabwean cotton and the like), G. barbadense (Egyptian cotton, Pima cotton, Indian cotton, Sea Island cotton, Sudanese cotton and the like), G. arboreum (Indian cotton and Pakistan cotton), G. anomalum, G. armourianum, G. klotzchianum, G. raimondii and the like are included. The additive amount of the cotton fiber is preferably 1 wt% to 25 wt% both inclusive to the entire weight from the results of examples described later.

As the polyamide resin, a polymer obtained by polycondensing diamine such as hexamethylenediamine, nonamethylenediamine, undecamethylenediamine, dodecamethylenediamine and meta-xylylenediamine; and dicarboxylic acid such as terephthalic acid, isophthalic acid, glutaric acid, adipic acid, azelaic acid, sebacic acid, undecanedioic acid, and dodecanedioic acid; or a copolymer obtained by mixing these polymers as appropriate can be applied.

Specifically, polyamide 4, polyamide 6, polyamide 7, polyamide 8, polyamide 11, polyamide 12, polyamide 6-6, polyamide 6-9, polyamide 6-10, polyamide 6-11, polyamide 6-12 and the like are included.

Among the foregoing polyamide resin, in particular, the polyamide 11 using castor oil as a raw material of plant origin is a superior material in the light of the impact on environment such as saving fossil resources and inhibiting generation of greenhouse gases.

Further, the polyamide 11 is a material having superior cold shock properties, heat resistance, heat and aging resistance, gas barrier properties, fuel barrier properties, flex fatigue resistance, wear resistance, and chemical resistance. By making a complex of the polyamide 11 and the cotton fiber, mechanical strength and chemical characteristics equal to those of a complex material of a polyamide resin made of a petroleum-based raw material and a conventionally known carbon-based or glass-based fiber can be exerted.

As the cotton fiber, a cotton fiber having an average fiber diameter of 100 µm or less is preferable. In the case where the average fiber diameter exceeds 100 µm, dispersibility in the polyamide resin is lowered, and thus rigidity of the intended composition may be lowered, or improvement effect of heat resistance may be insufficient. Specifically, a natural product-derived cellulose fiber having a diameter of several µm to several dozen µm is suitable.

Further, the cotton fiber is preferably provided with degreasing treatment in advance to remove the fat content. By providing this degreasing treatment, effect that dispersibility to the polyamide resin is increased and uniform dispersion is eased is obtained. Thereby, rigidity and heat resistance of the intended composition are improved, and coloring due to mixing the cotton fiber can be prevented.

Furthermore, chemical surface treatment may be provided for the cotton fiber to adjust affinity and dispersibility to the polyamide resin. Specifically, acylation treatment such as acetylation and benzoylation, silane coupling treatment and the like are included. By providing such a surface treatment, surface adhesion property to the polyamide resin is improved, and effect of preventing strength reduction due to interface debonding between the resin and the fiber is obtained.

The mixture ratio between the polyamide resin and the cotton fiber is preferably polyamide resin/cotton fiber = 99/1 to 75/25 at a weight ratio. The content of the cotton fiber is more preferably 3 wt% or more, and further desirably 5 wt% or more. In the case where the content of the cotton fiber is less than 1 wt%, sufficient effect of improving heat resistance is not obtained. Meanwhile, in the case where the content of the cotton fiber exceeds 25 wt%, practical material characteristics are deteriorated, for example, strength of the intended composition is lowered. Further, in the case where the content of the cotton fiber is 3 wt% or more, definite effect of improving heat resistance strength is confirmed.

A shaped article according to this embodiment uses the foregoing resin composition. The shaped article can be manufactured by the following method.

That is, a certain polyamide resin and a certain cotton fiber are melted and kneaded to form a resin composition. After that, the resin composition is hot-formed at, for example, 190 deg C to 240 deg C both inclusive. At this time, the additive amount of the cotton fiber is in the range from 1 wt% to 25 wt% both inclusive.

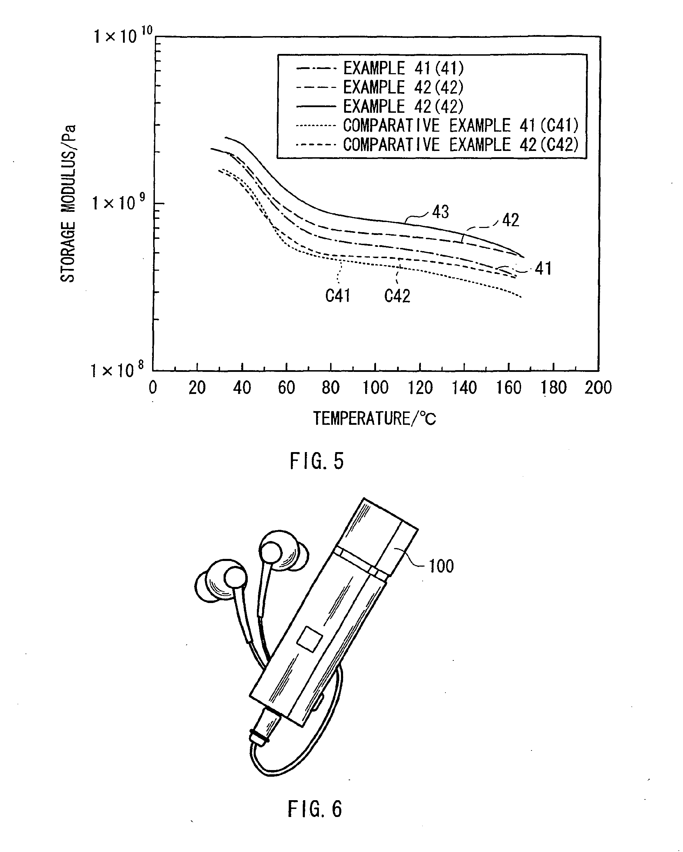

Specifically, a certain polyamide resin and a certain cotton fiber are mixed in a predetermined vessel, melted and kneaded by using a uniaxial screw kneading and extrusion machine, and the resultant is dried for 5 hours under the conditions of 1 mm Hg or less and 80 deg C. After that, the resultant is hot-formed and thereby a desired shaped article, for example, a housing of an electronic device such as a portable music player 100 illustrated in Fig. 6 can be fabricated.

In the shaped article of this embodiment, as evidenced by the following examples, since the cotton fiber as a plant fiber is contained in the resin composition composed of the polyamide resin, heat resistance is improved. Thus, in the case where the shaped article is applied to a housing of an electronic device such as the foregoing portable music player and a mobile phone, automotive parts, and a member in the vicinity of a heat source such as an electric power source and a driving source, practically sufficient endurance strength can be exerted. In particular, in the case where the polyamide 11 synthesized from a raw material of plant origin is used as the polyamide resin, a new complex material in which all components are derived from a plant can be obtained, which is an extremely desirable material in light of reduction in the global environmental load.

### [First examples]

Shaped article samples were fabricated by using the forgoing resin composition according to the first embodiment, and the characteristics thereof were evaluated.

[Examples 1 to 6] and [Comparative example 1]
(Raw material)
(A) Polyamide resin: polyamide 11
   (Rilsan (BMN, plant-derived, Arkema made)
(B) Cotton fiber: Kokuso Cotton (natural product-derived cellulose fiber)

The foregoing (A) and (B) were mixed by melt kneading method at a ratio (wt%) shown in the following Table 1, and samples having a mixture ratio different from each other were fabricated. In melt kneading, a uniaxial screw kneading and extrusion machine (manufactured by Imoto machinery Co., Ltd.) was used, the nozzle temperature was 190 to 210 deg C both inclusive, and the detention time was within 10 seconds. The complex composition of the polyamide resin and the cotton fiber formed under the foregoing conditions was pulverized. After that, the resultant was pressed at 195 deg C and 400 kg/cm², and thereby a platy sample shaped article having a thickness of 1.0 mm was obtained.

Next, for the shaped articles that were fabricated at the mixture ratios shown in Table 1, heat resistance test (viscoelasticity test at temperature in a wide range) was performed under the following conditions.

**[Table 1]**

| | Polyamide 11 (wt%) | Kokuso Cotton (wt%) |
|---|---|---|
| Example 1 | 99 | 1 |
| Example 2 | 97 | 3 |
| Example 3 | 95 | 5 |
| Example 4 | 90 | 10 |
| Example 5 | 85 | 15 |
| Example 6 | 80 | 20 |
| Example 7 | 75 | 25 |
| Comparative example 1 | 100 | 0 |

### (Viscoelasticity test method)

Measurement device: viscoelasticity analyzer, manufactured by Rheometric Scientific Inc.
Sample: compositions having the mixture ratios shown in the foregoing Table 1 (length: 50 mmx width: 7 mmxthickness: 1 mm)
Frequency: 6.28 (rad/s)
Measurement start temperature: 0 deg C
Measurement final temperature: 160 deg C
Rate of temperature increase: 5 deg C/min
Strain: 0.05%

### [Evaluation of heat resistance]

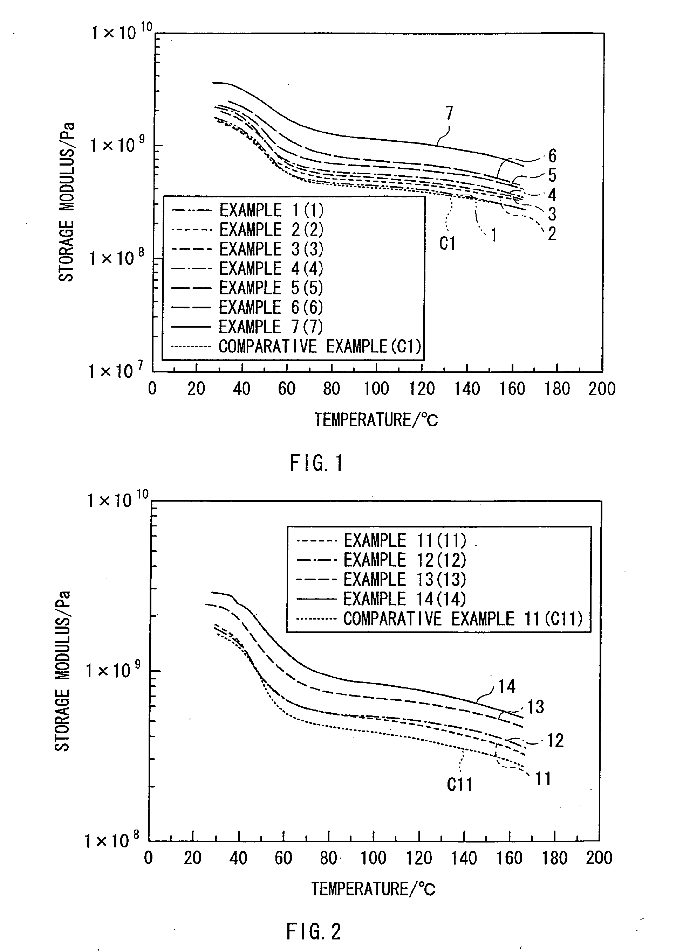

Fig. 1 illustrates viscoelasticity test results of the sample shaped articles of Examples 1 to 7 and Comparative example 1. Curved lines 1 to 7 in the figure respectively illustrate measurement results of temperature and elastic modulus of Examples 1 to 7, and Curved line C1 indicates the measurement result of temperature and elastic modulus of the comparative example. From the results, it was found that the strength of the sample shaped articles of Examples 1 to 7 made of the complex material of the polyamide resin (polyamide 11) and the cotton fiber was improved particularly in the temperature range of 46 deg C or more (glass transition temperature of the polyamide resin) compared to the sample of Comparative example 1 as a shaped article made of only the polyamide resin.

Further, as the content of the cotton fiber was increased, the mechanical strength was improved as well. In particular, in the case where 3 wt% or more of the cotton fiber was contained, definite effect was confirmed. Meanwhile, in the case where the amount of the cotton fiber exceeded 25 wt%, the strength of the resin composition was lowered.

A description will be given of other embodiments of the present invention in the following. For the sections common to those of the first embodiment, the description will be omitted. A description will be given only on sections different from the first embodiment.

### [Second embodiment]

A resin composition according to this embodiment contains a polyamide resin and a hemp fiber as a plant fiber. As the hemp, specifically, India hemp (hemp), flax (linen), A. avicennae, ramie, jute, kenaf, A. sisalana, Manila hemp and the like can be included. The additive amount of the hemp fiber is preferably 1 wt% to 30 wt% both inclusive to the entire weight from results of examples described later.

As the hemp fiber, a hemp fiber having an average fiber diameter of 100 µm or less is preferable. In the case where the average fiber diameter exceeds 100 µm, dispersibility in the polyamide resin is lowered, and thus rigidity of the intended composition may be lowered, or improvement effect of heat resistance may be insufficient. Specifically, a natural product-derived cellulose fiber having a diameter of several µm to several dozen µm is suitable.

The hemp fiber is preferably provided with degreasing treatment in advance to remove the fat content. By providing this degreasing treatment, effect that dispersibility to the polyamide resin is increased and uniform dispersion is eased is obtained. Thereby, rigidity and heat resistance of the intended composition are improved, and coloring due to mixing the hemp fiber can be prevented.

Furthermore, chemical surface treatment may be provided for the hemp fiber to adjust affinity and dispersibility to the polyamide resin. Specifically, acylation treatment such as acetylation and benzoylation, silane coupling treatment and the like are included. By providing such a surface treatment, surface adhesion property to the polyamide resin is improved, and effect of preventing strength reduction due to interface debonding between the resin and the fiber is obtained.

The mixture ratio between the polyamide resin and the hemp fiber is preferably polyamide resin/hemp fiber = 99/1 to 70/30 at a weight ratio. In the case where the content of the hemp fiber is 1 wt% or more, heat resistance strength is improved. In the case where the content of the hemp fiber is less than 1 wt%, sufficient effect of improving heat resistance is not obtained. Meanwhile, in the case where the content of the hemp fiber exceeds 30 wt%, practical material characteristics are deteriorated, for example, strength reduction of the intended composition is lowered.

A shaped article according to this embodiment uses the foregoing resin composition. The shaped article can be manufactured by the following method.

That is, a certain polyamide resin and a certain hemp fiber are melted and kneaded to form a resin composition. After that, the resin composition is hot-formed at, for example 190 deg C to 240 deg C both inclusive. At this time, the additive amount of the hemp fiber is in the range from 1 wt% to 30 wt% both inclusive.

Specifically, a certain polyamide resin and a certain hemp fiber are mixed in a predetermined vessel, melted and kneaded by using a uniaxial screw kneading and extrusion machine, and the resultant is dried for 5 hours under the conditions of 1 mm Hg or less and 80 deg C. After that, the resultant is hot-formed and thereby a desired shaped article can be fabricated.

In the shaped article of this embodiment, since the hemp fiber is contained in the resin composition composed of the polyamide resin, heat resistance is improved in the same manner as in the first embodiment. Thus, in the case where the shaped article is applied to a housing of an electronic device, automotive parts, and a member in the vicinity of a heat source such as an electric power source and a driving source, practically sufficient endurance strength can be exerted. In particular, in the case where the polyamide 11 synthesized from a raw material of plant origin is used as the polyamide resin, a new complex material in which all components are derived from a plant can be obtained, which is an extremely desirable material in light of reduction in the global environmental load.

### [Second examples]

The shaped article samples were fabricated by using the foregoing resin composition according to the second embodiment, and the characteristics thereof were evaluated.

[Examples 11 to 14] and [Comparative example 11]
(Raw material)
(A) Polyamide resin: polyamide 11
   (Rilsan (BMN, plant-derived, Arkema made)
(B) Plant fiber: powder hemp fiber

The foregoing (A) and (B) were mixed by melt kneading method at a ratio (wt%) shown in Table 2, and samples having a mixture ratio different from each other were fabricated. In melt kneading, a uniaxial screw kneading and extrusion machine (manufactured by Imoto machinery Co., Ltd.) was used, the nozzle temperature was 190 to 210 deg C both inclusive, and the detention time was within 10 seconds. The complex composition of the polyamide resin and the hemp fiber formed under the foregoing conditions was pulverized. After that, the resultant was pressed at 195 deg C and 400 kg/cm², and thereby a platy sample shaped article having a thickness of 1.0 mm was obtained.

**[Table 2]**

| | Polyamide 11 (wt%) | Hemp fiber (wt%) |
|---|---|---|
| Example 11 | 99 | 1 |
| Example 12 | 97 | 3 |
| Example 13 | 80 | 20 |
| Example 14 | 70 | 30 |
| Comparative example 11 | 100 | 0 |

Next, for the shaped articles of the compositions made at the mixture ratios shown in Table 2, heat resistance test (viscoelasticity test at temperature in a wide range) was performed under the following conditions.

### (Viscoelasticity test method)

Measurement device: viscoelasticity analyzer, manufactured by Rheometric Scientific Inc.
Sample: compositions having the mixture ratios shown in the foregoing Table 1 (length: 50 mm× width: 7 mm×thickness: 1 mm)
Frequency: 6.28 (rad/s)
Measurement start temperature: 0 deg C
Measurement final temperature: 160 deg C
Rate of temperature increase: 5 deg C/min
Strain: 0.05%

### [Evaluation of heat resistance]

Fig. 2 illustrates viscoelasticity test results of the sample shaped articles of Examples 11 to 14 and Comparative example 11. Curved lines 11 to 14 in the figure respectively illustrate measurement results of temperature and elastic modulus of Examples 11 to 14, and Curved line C11 indicates the measurement result of temperature and elastic modulus of Comparative example 11. It could be confirmed that the strength of the sample shaped articles of Examples 11 to 14 made of the complex material of the polyamide resin (polyamide 11) and the hemp fiber was improved particularly in the temperature range of 46 deg C or more (glass transition temperature of the polyamide resin) compared to the sample of Comparative example 11 as a shaped article made of only the polyamide resin.

Further, as the content of the hemp fiber was increased, the mechanical strength was improved as well. In particular, in the case where 1 wt% or more of the hemp fiber was contained, definite effect was confirmed. Meanwhile, it was found that in the case where the amount of the cotton fiber exceeded 30 wt%, the strength of the resin composition was lowered.

### [Third embodiment]

A resin composition according to this embodiment contains a polyamide resin and a bamboo fiber as a plant fiber. As the bamboo, specifically, poaceous bamboo, in particular, Phyllostachys (P. aureosulcata, P. bambusoides, P. glauca, P. heterocycla, P. makinoi, P. nigra, P. aurea, and P. heterocycla), Shibataea, Tetragonocalamus, Semiarundinaria (S. kagamiana, S. fastuosa, S. fortis, medanarihira, S. maruyamana, S. okuboi, S. tatebeana muroi, S. yashadake Makino, S. yoshi-matumurae, and S. vilidis), Sinobambusa (S. tootsik), Pseudosasa (P. owatarii, P. japonica, P. japonica f. pleioblastoides, and P. japonica v. tsutsumiana), Sasaella (S. reikoana, S. bitchuensis, S. masamuneana, A. muroiana Koidz, maezawazasa, and S. remosa var. suwekoana), Sasa veitchii (kitamikozasa, Sasa chartacea var. nana, geibikumazasa, rokkoumiyamazasa, Sasa yamatensis, Sasa kagamiana, Sasa septentrionalis f. kuzakaiana, Sasa senanensis f. nobilis, Sasa palmata ssp. nebulosa, fushibutozasa, tanahashizasa, yarikumasozasa, Sasa asahinae, hatsurouzasa, Sasa oshidansis, Sasa stenophylla subsp. tobagenzoana, Sasa shimidzuana Makino, fushigehimekamizasa, Sasa unoi Makino, Sasa hayatae, Sasa hayatae Makino, arimakosuzuinusuzu, S. borealis v. purpurascens, kumasuzuhangesuzu, S. mollis, f. aureostriata Muroi, and S. kurilensis), Chimonobambusa, Pleioblastus (P. linearis Nakai, P. hindsii Nakai, P. gramineus Nakai, f. heterophyllus Muroi, sudareyoshigokidake, boushuunezasa, P. chino Makino, jyouhoujidake, P. distichus, and P. puescens Nakai), Bambusa (soruni bamboo), Bambusa, Bambusa (B. multiplex, B. multiplex Raeusch. f. alphonsokarri Nakai, and daunsanchiku) and the like are included. The additive amount of the bamboo fiber is preferably 1 wt% to 30 wt% both inclusive to the entire weight from results of examples described later.

As the bamboo fiber, a bamboo fiber having an average fiber diameter of 100 µm or less is preferable. In the case where the average fiber diameter exceeds 100 µm, dispersibility in the polyamide resin is lowered, and thus rigidity of the intended composition may be lowered, or improvement effect of heat resistance may be insufficient. Specifically, a natural product-derived cellulose fiber having a diameter of several µm to several dozen µm is suitable.

The bamboo fiber is preferably provided with degreasing treatment in advance to remove the fat content. By providing this degreasing treatment, dispersibility to the polyamide resin is increased and effect such that uniform dispersion is eased is obtained. Thereby, rigidity and intended heat resistance of the intended composition are improved, and coloring due to mixing the bamboo fiber can be prevented.

Furthermore, chemical surface treatment may be provided for the bamboo fiber to adjust affinity and dispersibility to the polyamide resin. Specifically, acylation treatment such as acetylation and benzoylation, silane coupling treatment and the like are included. By providing these surface treatments, surface adhesion property to the polyamide resin is improved, and effect of preventing strength reduction due to interface debonding between the resin and the fiber is obtained.

The mixture ratio between the polyamide resin and the bamboo fiber is polyamide resin/bamboo fiber = 99/1 to 70/30 at a weight ratio. The content of the bamboo fiber is preferably 1 wt% or more. In the case where the content of the bamboo fiber is less than 1 wt%, sufficient effect of improving heat resistance is not obtained. Meanwhile, in the case where the content of the bamboo fiber exceeds 30 wt%, practical material characteristics are deteriorated, for example, strength reduction of the intended composition is lowered. Further, in the case where the content of the bamboo fiber is 1 wt% or more, the heat resistance strength is improved.

A shaped article according to this embodiment uses the foregoing resin composition. The shaped article can be manufactured by the following method.

That is, a certain polyamide resin and a certain bamboo fiber are melted and kneaded to form a resin composition. After that, the resin composition is hot-formed at, for example, 190 deg C to 240 deg C both inclusive. At this time, the additive amount of the bamboo fiber is in the range from 1 wt% to 30 wt% both inclusive.

Specifically, a certain polyamide resin and a certain bamboo fiber are mixed in a predetermined vessel, melted and kneaded by using a uniaxial screw kneading and extrusion machine, and the resultant is dried for 5 hours under the conditions of 1 mm Hg or less and 80 deg C. After that, the resultant is hot-formed and thereby a desired shaped article can be fabricated.

In the shaped article of this embodiment, since the bamboo fiber is contained in the resin composition composed of the polyamide resin, heat resistance is improved in the same manner as in the first embodiment. Thus, in the case where the shaped article is applied to a housing of an electronic device, automotive parts, and a member in the vicinity of a heat source such as an electric power source and a driving source, practically sufficient endurance strength can be exerted. In particular, in the case where the polyamide 11 synthesized from a raw material of plant origin is used as the polyamide resin, a new complex material in which all components are derived from a plant can be obtained, which is an extremely desirable material in light of reduction in the global environmental load.

### [Third examples]

The shaped article samples were fabricated by using the resin composition according to the third embodiment, and the characteristics thereof were evaluated.

[Examples 21 and 22] and [Comparative example 21]
(Raw material)
(A) Polyamide resin: polyamide 11
   (Rilsan (BMN, plant-derived, Arkema made)
(B) Plant fiber: powder bamboo fiber

The foregoing (A) and (B) were mixed by melt kneading method at a ratio (wt%) shown in Table 3, and samples having a mixture ratio different from each other were fabricated. In melt kneading, a uniaxial screw kneading and extrusion machine (manufactured by Imoto machinery Co., Ltd.) was used, the nozzle temperature was 190 to 210 deg C both inclusive, and the detention time was within 10 seconds. The complex composition of the polyamide resin and the bamboo fiber formed under the foregoing conditions was pulverized. After that, the resultant was pressed at 195 deg C and 400 kg/cm², and thereby a platy sample shaped article having a thickness of 1.0 mm was obtained.

**[Table 3]**

| | Polyamide 11 (wt%) | Bamboo fiber (wt%) |
|---|---|---|
| Example 21 | 99 | 1 |
| Example 22 | 70 | 30 |
| Comparative example 21 | 100 | 0 |

Next, for the shaped articles of the compositions made at the mixture ratios shown in Table 3, heat resistance test (viscoelasticity test at temperature in a wide range) was performed under the following conditions.

### (Viscoelasticity test method)

Measurement device: viscoelasticity analyzer, manufactured by Rheometric Scientific Inc.
Sample: compositions having the mixture ratios shown in the foregoing Table 1 (length: 50 mm× width: 7 mm×thickness: 1 mm)
Frequency: 6.28 (rad/s)
Measurement start temperature: 0 deg C
Measurement final temperature: 160 deg C
Rate of temperature increase: 5 deg C/min
Strain: 0.05%

### [Evaluation of heat resistance]

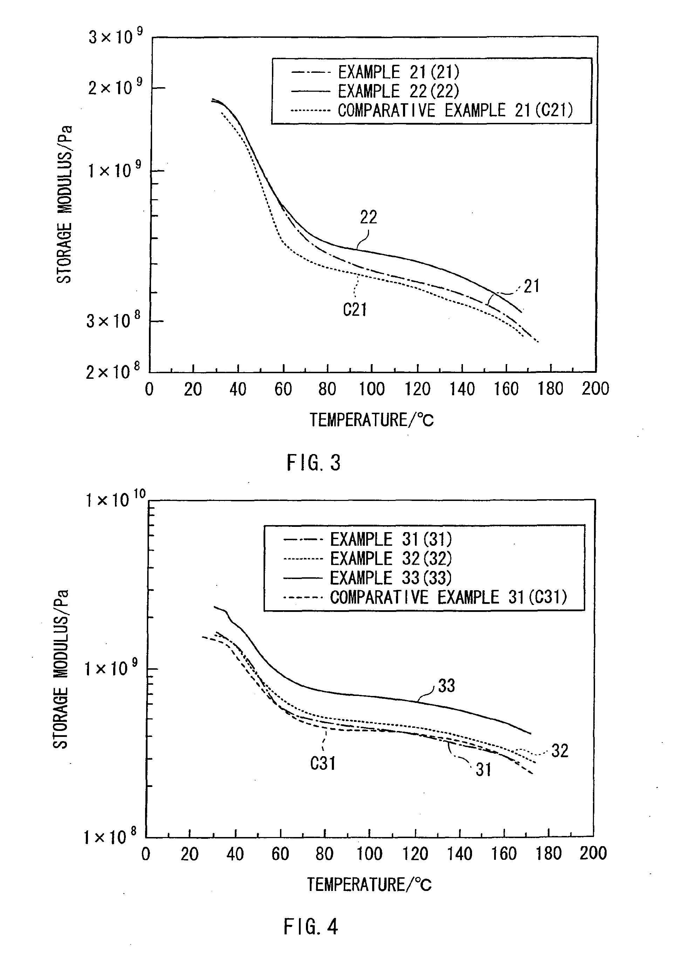

Fig. 3 illustrates viscoelasticity test results of the sample shaped articles of Examples 21 and 22 and Comparative example 21. Curved lines 21 and 22 in the figure respectively indicate measurement results of temperature and elastic modulus of Examples 21 and 22, and Curved line C21 indicates the measurement result of temperature and elastic modulus of Comparative example 11. It could be confirmed that the strength of the sample shaped articles of Examples 21 and 22 made of the complex material of the polyamide resin (polyamide 11) and the bamboo fiber was improved particularly in the temperature range of 46 deg C or more (glass transition temperature of the polyamide resin) compared to the sample of Comparative example 11 as a shaped article made of only the polyamide resin.

Further, as the content of the bamboo fiber was increased, the mechanical strength was improved as well. In particular, in the case where 1 wt% or more of the bamboo fiber was contained, definite effect was confirmed. Meanwhile, it was found that in the case where the amount of the bamboo fiber exceeded 30 wt%, the strength of the resin composition was lowered.

### [Fourth embodiment]

A resin composition according to this embodiment contains a polyamide resin and a wood powder as a plant fiber. As the wood powder, sandalwood, larch, spruce, fir, hemlock fir, cherry, cedar, oak, Japanese cypress, beech, lauan and the like are included. The additive amount of the wood powder is preferably 1 wt% to 25 wt% both inclusive to the entire weight from results of examples described later.

As the wood powder, a wood powder having an average fiber diameter of 100 µm or less is preferable. In the case where the average fiber diameter exceeds 100 µm, dispersibility in the polyamide resin is lowered, and thus rigidity of the intended composition may be lowered, or improvement effect of heat resistance may be insufficient. Specifically, a natural product-derived cellulose fiber having a diameter of several µm to several dozen µm is suitable.

The wood powder is preferably provided with degreasing treatment in advance to remove the fat content. By providing this degreasing treatment, dispersibility to the polyamide resin is increased and effect such that uniform dispersion is eased is obtained. Thereby, rigidity and heat resistance of the intended composition are improved, and coloring due to mixing the wood powder can be prevented.

Furthermore, chemical surface treatment may be provided for the wood powder to adjust affinity and dispersibility to the polyamide resin. Specifically, acylation treatment such as acetylation and benzoylation, silane coupling treatment and the like are included. By providing these surface treatments, surface adhesion property to the polyamide resin is improved, and effect of preventing strength reduction due to interface debonding between the resin and the fiber is obtained.

The mixture ratio between the polyamide resin and the wood powder is preferably polyamide resin/wood powder = 99/1 to 85/25 at a weight ratio. In the case where the content of the wood powder is 1 wt% or more, the heat resistance strength is improved. In the case where the content of the wood powder is less than 1 wt%, sufficient effect of improving heat resistance is not obtained. Meanwhile, in the case where the content of the wood powder exceeds 25 wt%, strength of the intended composition is lowered.

A shaped article according to this embodiment is made by using the foregoing resin composition. The shaped article can be manufactured by the following method.

That is, a certain polyamide resin and a certain wood powder are melted and kneaded to form a resin composition. After that, the resin composition is hot-formed at, for example, 190 deg C to 240 deg C both inclusive. At this time, the additive amount of the wood powder is in the range from 1 wt% to 25 wt% both inclusive.

Specifically, a certain polyamide resin and a certain wood powder are mixed in a predetermined vessel, melted and kneaded by using a uniaxial screw kneading and extrusion machine, and the resultant is dried for 5 hours under the conditions of 1 mm Hg or less and 80 deg C. After that, the resultant is hot-formed and thereby a desired shaped article can be fabricated.

In the shaped article of this embodiment, since the wood powder is contained in the resin composition composed of the polyamide resin, heat resistance is improved in the same manner as in the first embodiment. Thus, in the case where the shaped article is applied to a housing of an electronic device, automotive parts, and a member in the vicinity of a heat source such as an electric power source and a driving source, practically sufficient endurance strength can be exerted. In particular, in the case where the polyamide 11 synthesized from a raw material of plant origin is used as the polyamide resin, a new complex material in which all components are derived from a plant can be obtained, which is an extremely desirable material in light of reduction in the global environmental load.

### [Fourth examples]

The shaped article samples were fabricated by using the resin composition according to the fourth embodiment, and the characteristics thereof were evaluated.

[Examples 31 to 32] and [Comparative example 31]
(Raw material)
(A) Polyamide resin: polyamide 11
   (Rilsan (BMN, plant-derived, Arkema made)
(B) Plant fiber: wood powder

The foregoing (A) and (B) were mixed by melt kneading method at a ratio (wt%) shown in Table 4, and samples having a mixture ratio different from each other were fabricated. In melt kneading, a uniaxial screw kneading and extrusion machine (manufactured by Imoto machinery Co., Ltd.) was used, the nozzle temperature was 190 to 210 deg C both inclusive, and the detention time was within 10 seconds. The complex composition of the polyamide resin and the wood powder made under the foregoing conditions was pulverized. After that, the resultant was pressed at 195 deg C and 400 kg/cm², and thereby a platy sample shaped article having a thickness of 1.0 mm was obtained.

**[Table 4]**

| | Polyamide 11 (wt%) | Wood powder (wt%) |
|---|---|---|
| Example 31 | 99 | 1 |
| Example 32 | 97 | 3 |
| Example 33 | 75 | 25 |
| Comparative example 31 | 100 | 0 |

Next, for the shaped articles of the compositions made at the mixture ratios shown in Table 4, heat resistance test (viscoelasticity test at temperature in a wide range) was performed under the following conditions.

### (Viscoelasticity test method)

Measurement device: viscoelasticity analyzer, manufactured by Rheometric Scientific Inc.
Sample: compositions having the mixture ratios shown in the foregoing Table 1 (length: 50 mmx width: 7 mmxthickness: 1 mm)
Frequency: 6.28 (rad/s)
Measurement start temperature: 0 deg C
Measurement final temperature: 160 deg C
Rate of temperature increase: 5 deg C/min
Strain: 0.05%

### [Evaluation of heat resistance]

Fig. 4 illustrates viscoelasticity test results of the sample shaped articles of Examples 31 to 33 and Comparative example 31. Curved lines 31 to 33 in the figure respectively indicate measurement results of temperature and elastic modulus of Examples 31 to 33, and Curved line C31 indicates the measurement result of temperature and elastic modulus of Comparative example 31. It could be confirmed that the strength of the sample shaped articles of Examples 31 to 33 made of the complex material of the polyamide resin (polyamide 11) and the wood powder was improved particularly in the temperature range of 46 deg C or more (glass transition temperature of the polyamide resin) compared to the sample of Comparative example 31 as a shaped article made of only the polyamide resin.

Further, as the content of the wood powder was increased, the mechanical strength was improved as well. In particular, in the case where 3 wt% or more of the wood powder was contained, definite effect was confirmed. Meanwhile, it was found that in the case where the amount of wood powder exceeded 25 wt%, the strength of the resin composition was lowered.

### [Fifth embodiment]

A resin composition according to this embodiment contains a polyamide resin and a silk fiber as a biofiber. The additive amount of the silk fiber is preferably 5 wt% to 30 wt% both inclusive to the entire weight from results of examples described later.

As the silk fiber, a silk fiber having an average fiber diameter of 100 µm or less is preferable. In the case where the average fiber diameter exceeds 100 µm, dispersibility in the polyamide resin is lowered, and thus rigidity of the intended composition may be lowered, or improvement effect of heat resistance may be insufficient. Specifically, a silk fiber having a diameter of several µm to several dozen µm is suitable.

The silk fiber is preferably provided with degreasing treatment in advance to remove the fat content. By providing this degreasing treatment, dispersibility to the polyamide resin is increased and effect such that uniform dispersion is eased is obtained. Thereby, rigidity and heat resistance of the intended composition are improved, and coloring due to mixing the silk fiber can be prevented.

Furthermore, chemical surface treatment may be provided for the silk fiber to adjust affinity and dispersibility to the polyamide resin. Specifically, acylation treatment such as acetylation and benzoylation, silane coupling treatment and the like are included. By providing these surface treatments, surface adhesion property to the polyamide resin is improved, and effect of preventing strength reduction due to interface debonding between the resin and the fiber is obtained.

The mixture ratio between the polyamide resin and the silk fiber is preferably polyamide resin/silk fiber = 95/5 to 70/30 at a weight ratio. In the case where the content of the silk fiber is 5 wt% or more, the heat resistance strength is improved. In the case where the content of the silk fiber is less than 5 wt%, sufficient effect of improving heat resistance is not obtained. Meanwhile, in the case where the content of the silk fiber exceeds 30 wt%, strength of the intended composition is lowered.

A shaped article according to this embodiment uses the foregoing resin composition. The shaped article can be manufactured by the following method.

That is, a certain polyamide resin and a certain silk fiber are melted and kneaded to form a resin composition. After that, the resin composition is hot-formed at, for example, 190 deg C to 240 deg C both inclusive. At this time, the additive amount of the silk fiber is in the range from 5 wt% to 30 wt% both inclusive.

Specifically, a certain polyamide resin and a certain silk fiber are mixed in a predetermined vessel, melted and kneaded by using a uniaxial screw kneading and extrusion machine, and the resultant is dried for 5 hours under the conditions of 1 mm Hg or less and 80 deg C. After that, the resultant is hot-formed and thereby a desired shaped article can be fabricated.

In the shaped article of this embodiment, since the silk fiber is contained in the resin composition composed of the polyamide resin, heat resistance is improved in the same manner as in the first embodiment. Thus, in the case where the shaped article is applied to a housing of an electronic device, automotive parts, and a member in the vicinity of a heat source such as an electric power source and a driving source, practically sufficient endurance strength can be exerted. In particular, in the case where the polyamide 11 synthesized from a raw material of plant origin is used as the polyamide resin, a new complex material in which all components are derived from a natural product can be obtained, which is an extremely desirable material in light of reduction in the global environmental load.

### [Fifth examples]

The shaped article samples were fabricated by using the foregoing resin composition according to the fifth embodiment, and the characteristics thereof were evaluated.

[Examples 41 to 43] and [Comparative examples 41 and 42]
(Raw material)
(A) Polyamide resin: polyamide 11
   (Rilsan (BMN, plant-derived, Arkema made)
(B) Plant fiber: powder silk fiber

The foregoing (A) and (B) were mixed by melt kneading method at a ratio (wt%) shown in Table 5, and samples having a mixture ratio different from each other were fabricated. In melt kneading, a uniaxial screw kneading and extrusion machine (manufactured by Imoto machinery Co., Ltd.) was used, the nozzle temperature was 190 to 210 deg C both inclusive, and the detention time was within 10 seconds. The complex composition of the polyamide resin and the silk fiber formed under the foregoing conditions was pulverized. After that, the resultant was pressed at 195 deg C and 400 kg/cm², and thereby a platy sample shaped article having a thickness of 1.0 mm was obtained.

**[Table 5]**

| | Polyamide 11 (wt%) | Silk fiber (wt%) |
|---|---|---|
| Example 41 | 95 | 5 |
| Example 42 | 80 | 20 |
| Example 43 | 70 | 30 |
| Comparative example 41 | 100 | 0 |
| Comparative example 42 | 99 | 1 |

Next, for the shaped articles of the compositions made at the mixture ratios shown in Table 5, heat resistance test (viscoelasticity test at temperature in a wide range) was performed under the following conditions.

### (Viscoelasticity test method)

Measurement device: viscoelasticity analyzer, manufactured by Rheometric Scientific Inc.
Sample: compositions having the mixture ratios shown in the foregoing Table 1 (length: 50 mmx width: 7 mmxthickness: 1 mm)
Frequency: 6.28 (rad/s)
Measurement start temperature: 0 deg C
Measurement final temperature: 160 deg C
Rate of temperature increase: 5 deg C/min
Strain: 0.05%

### [Evaluation of heat resistance]

Fig. 5 illustrates viscoelasticity test results of the sample shaped articles of Examples 41 to 43 and Comparative examples 41 and 42. Curved lines 41 to 43 in the figure respectively indicate measurement results of temperature and elastic modulus of Examples 41 to 43, and Curved lines C41 and C42 indicate the measurement result of temperature and elastic modulus of Comparative examples 41 and 42. It could be confirmed that the strength of the sample shaped articles of Examples 41 to 43 made of the complex material of the polyamide resin (polyamide 11) and the silk fiber was improved particularly in the temperature range of 46 deg C or more (glass transition temperature of the polyamide resin) compared to the samples of Comparative examples 41 and 42 as a shaped article made of only the polyamide resin.

Further, as the content of the silk fiber was increased, the mechanical strength was improved as well. In particular, in the case where 5 wt% or more of the silk fiber was contained, definite effect was confirmed. Meanwhile, in the case where the amount of the silk fiber exceeded 30 wt%, the strength of the resin composition was lowered.

The present invention has been described with reference to the embodiments and the examples. However, the present invention is not limited to the foregoing embodiments and the foregoing examples, and various modifications may be made. For example, in the foregoing embodiments, the description has been given of the housing of the portable music player as a specific example of the shaped article. However, the shaped article is applicable as other electronic device such as a mobile phone, automotive parts, and a member in the vicinity of a heat source such as an electric power source and a driving source.

Further, in the foregoing embodiments and the foregoing examples, the description has been given of a case where the natural fiber is added to the polyamide resin as the resin composition of the present invention. However other component such as a flexibilizer and a plasticizer may be contained. In such a case, the additive amount of the foregoing respective fibers is desirably in the range described in the respective embodiments.

Further, in the foregoing embodiments and the foregoing examples, the description has been given of the specific examples such as the cotton and the hemp as a natural fiber to be added. However, two or more thereof may used by mixture. Further, the present invention does not exclude other natural fiber. A plant fiber such as palm and luffa and a biofiber such as a wool fiber (sheep wool) may be used.

## Claims

1. A resin composition, **characterized in that** a polyamide resin and a natural fiber are contained.

2. The resin composition according to claim 1, **characterized in that** the polyamide resin is polyamide 11.

3. The resin composition according to claim 2, **characterized in that** the polyamide 11 is synthesized from a raw material of plant origin.

4. The resin composition according to claim 1, **characterized in that** the natural fiber is a plant fiber.

5. The resin composition according to claim 4, **characterized in that** the plant fiber is a cotton fiber, and an additive amount of the cotton fiber is 1 wt% to 25 wt% both inclusive.

6. The resin composition according to claim 4, **characterized in that** the plant fiber is a hemp fiber, and an additive amount of the hemp fiber is 1 wt% to 30 wt% both inclusive.

7. The resin composition according to claim 4, **characterized in that** the plant fiber is a bamboo fiber, and an additive amount of the bamboo fiber is 1 wt% to 30 wt% both inclusive.

8. The resin composition according to claim 4, **characterized in that** the plant fiber is wood powder, and an additive amount of the wood powder is 1 wt% to 25 wt% both inclusive.

9. The resin composition according to claim 1, **characterized in that** the plant fiber is at least one of a cotton fiber, a hemp fiber, a bamboo fiber, and a wood powder fiber.

10. The resin composition according to claim 1, **characterized in that** the natural fiber is a biofiber.

11. The resin composition according to claim 10, **characterized in that** the biofiber is a silk fiber, and an additive amount of the silk fiber is 5 wt% to 30 wt% both inclusive.

12. A shaped article fabricated by using a resin composition, **characterized in that** the resin composition contains a polyamide resin and a natural fiber.

13. The shaped article according to claim 12, **characterized in that** the natural fiber is a plant fiber, and the plant fiber is at least one of a cotton fiber, a hemp fiber, a bamboo fiber, and a wood powder fiber.

14. The shaped article according to claim 12, **characterized in that** the natural fiber is a biofiber, and the biofiber is a silk fiber.

15. A method of manufacturing a shaped article, **characterized in that** a step of forming a resin composition by melting and kneading a polyamide resin and a natural fiber, and a step of obtaining a shaped article by hot-forming the resin composition are included, and
as the polyamide resin, polyamide 11 synthesized from a raw material of plant origin is used.

16. The method of manufacturing a shaped article according to claim 15, **characterized in that** as the natural fiber, at least one of a cotton fiber, a hemp fiber, a bamboo fiber, and a wood powder fiber is used.

17. The method of manufacturing a shaped article according to claim 15, **characterized in that** as the natural fiber, a silk fiber is used.

18. An electronic device fabricated from a shaped article, **characterized in that** the shaped article is formed from a resin composition containing a polyamide resin and a natural fiber.

19. The electronic device according to claim 18, wherein the natural fiber is at least one of a cotton fiber, a hemp fiber, a bamboo fiber, and a wood powder fiber.

20. The electronic device according to claim 18, wherein the natural fiber is a silk fiber.

## Amended claims

### Amended claims under Art. 19.1 PCT

**1.** (Amended) A resin composition, **characterized in that** a polyamide resin and a natural fiber in which content thereof is 1 wt% to 30 wt% both inclusive are contained.

**2.** The resin composition according to claim 1, **characterized in that** the polyamide resin is polyamide 11.

**3.** The resin composition according to claim 2, **characterized in that** the polyamide 11 is synthesized from a raw material of plant origin.

**4.** The resin composition according to claim 1, **characterized in that** the natural fiber is a plant fiber.

**5.** The resin composition according to claim 4, **characterized in that** the plant fiber is a cotton fiber, and an additive amount of the cotton fiber is 1 wt% to 25 wt% both inclusive.

**6.** The resin composition according to claim 4, **characterized in that** the plant fiber is a hemp fiber, and an additive amount of the hemp fiber is 1 wt% to 30 wt% both inclusive.

**7.** The resin composition according to claim 4, **characterized in that** the plant fiber is a bamboo fiber, and an additive amount of the bamboo fiber is 1 wt% to 30 wt% both inclusive.

**8.** The resin composition according to claim 4, **characterized in that** the plant fiber is wood powder, and an additive amount of the wood powder is 1 wt% to 25 wt% both inclusive.

**9.** The resin composition according to claim 1, **characterized in that** the plant fiber is at least one of a cotton fiber, a hemp fiber, a bamboo fiber, and a wood powder fiber.

**10.** The resin composition according to claim 1, **characterized in that** the natural fiber is a biofiber.

**11.** The resin composition according to claim 10, **characterized in that** the biofiber is a silk fiber, and an additive amount of the silk fiber is 5 wt% to 30 wt% both inclusive.

**12.** A shaped article fabricated by using a resin composition, **characterized in that** the resin composition contains a polyamide resin and a natural fiber.

**13.** The shaped article according to claim 12, **characterized in that** the natural fiber is a plant fiber, and the plant fiber is at least one of a cotton fiber, a hemp fiber, a bamboo fiber, and a wood powder fiber.

**14.** The shaped article according to claim 12, **characterized in that** the natural fiber is a biofiber, and the biofiber is a silk fiber.

**15.** A method of manufacturing a shaped article, **characterized in that** a step of forming a resin composition by melting and kneading a polyamide resin and a natural fiber, and a step of obtaining a shaped article by hot-forming the resin composition are included, and
as the polyamide resin, polyamide 11 synthesized from a raw material of plant origin is used.

**16.** The method of manufacturing a shaped article according to claim 15, **characterized in that** as the natural fiber, at least one of a cotton fiber, a hemp fiber, a bamboo fiber, and a wood powder fiber is used.

**17.** The method of manufacturing a shaped article according to claim 15, **characterized in that** as the natural fiber, a silk fiber is used.

**18.** An electronic device fabricated from a shaped article, **characterized in that** the shaped article is formed from a resin composition containing a polyamide resin and a natural fiber.

**19.** The electronic device according to claim 18, wherein the natural fiber is at least one of a cotton fiber, a hemp fiber, a bamboo fiber, and a wood powder fiber.

**20.** The electronic device according to claim 18, wherein the natural fiber is a silk fiber.
